# EUROPEAN PATENT APPLICATION

(11) **EP 3 626 510 A1**
(43) Date of publication of application: **25.03.2020**
(21) Application number: 18195185.6
(22) Date of filing: 18.09.2018
(51) Int. Cl.: B60L 53/16, B60L 53/12, B60L 53/38, B60L 53/10, B60L 15/38, H02J 7/00, H01R 13/00

(54) **ELECTRICAL VEHICLE AND METHOD FOR CHARGING AN ELECTRICAL VEHICLE**

(71) Applicant: ABB Schweiz AG, 5400 Baden (CH)
(72) Inventor: Raaijmakers, Stefan, 2613 WN Delft (NL)
(74) Representative: Michalski Hüttermann & Partner Patentanwälte mbB

(57) **Abstract**

The invention relates to an electrical vehicle (1) comprising at least two of an inductive charging interface (16) and a conductive charging interface (17), whereby
the at least two of the inductive charging interface (15) and the conductive charging interface (16) are configured for alternately or concurrently receiving electrical energy for charging the electrical vehicle (1),
if the conductive charging interface (17) is provided then the conductive charging interface (17) is configured for receiving electrical energy from a charger (2) via an automatic connection system (11) and/or comprises the automatic connection system (11) for connecting with the charger (2), and
at least two of the inductive charging interface (15) and the conductive charging interface (17) are arranged underneath the vehicle body (15).

## Description

### Technical Field

The invention relates to an electrical vehicle comprising preferably a vehicle body and an inductive charging interface. The method further relates to a method for charging an electrical vehicle comprising preferably a vehicle body and an inductive charging interface.

### Background Art

Electric vehicle, EV, direct current, DC, fast charging systems and methods often use a so-called Combined Charging System, CCS, protocol according to IEC 61851-23 and SAE J1772 standard for charging electrical vehicles both in the US and in the European Union, EU. As charge currents increase, liquid cooled charge cables for connecting an Electric Vehicle Supply Equipment, EVSE, via a charge connector with the electrical vehicle are becoming more commonly used. The liquid cooling allows conductors within the charge cable to become thinner, and thereby less stiff and easier to use, because excessive heat due to high charge currents and charge cable internal resistances is taken care of. On the other side liquid cooling increases weight of the charge cable and makes handling due to the additional weight difficult.

Even though, as charge currents are still going up, cables are becoming thicker. In turn weight of the cables and in particular of liquid cooled conductive cables are increasing and are becoming too much for an ordinary person to handle. Besides that, connectors are venerable components that are easily damaged if dropped or handled incorrectly and cooled cables only offer limited extensions to those power levels. Therefore, robotic systems have been developed for overcoming these disadvantages. However, such robotic systems are expensive and potentially dangerous for humans being too close to such robotic arms. On the other side, inductive charging systems allow for very user-friendly charging, however at lower power levels only.

### Summary of invention

It is therefore an object of the invention to provide an electrical vehicle, a method, a charger and/or a respective arrangement for user-friendly and flexible charging the electrical vehicle with electrical energy.

The object of the invention is solved by the features of the independent claims. Preferred embodiments are detailed in the dependent claims.

Thus, the object is solved by an electrical vehicle comprising preferably a vehicle body, at least one of an inductive charging interface and a conductive charging interface, whereby
the at least one of the inductive charging interface and the conductive charging interface are configured for alternately or concurrently charging the electrical vehicle with electrical energy,
if the conductive charging interface is provided then the conductive charging interface is configured for receiving electrical energy from a charger via an automatic connection system and/or comprises the automatic connection system for connecting to the charger, and
the at least one of the inductive charging interface and the conductive charging interface are arranged underneath the preferably vehicle body of the electrical vehicle.

The object is further solved by a method for charging an electrical vehicle comprising preferably a vehicle body, at least one of an inductive charging interface and a conductive charging interface, whereby
the at least one of the inductive charging interface and the conductive charging interface are arranged underneath the preferably vehicle body of the electrical vehicle, and the method comprising the steps of:
if the conductive charging interface is provided, connecting the conductive charging interface and a charger via an automatic connection system, and/or
charging the electrical vehicle alternately or concurrently with the at least one of the inductive charging interface and the conductive charging interface.

It is therefore a key point of the invention to combine high power conductive charging with wireless respectively inductive charging, whereby respective interfaces are arranged on the bottom of the vehicle for providing a most user-friendly charging possibility. The inductive charging interface does not require any moving parts and can thus be provided relatively cheap and ubiquitous. A user of the electrical vehicle may park the electrical vehicle anywhere and slow-charge the electrical vehicle using the inductive charging interface without any additional steps. For such inductive charging electrical charging power is usually limited such that charging typically takes between 30 minutes and 8 hours.

For connecting the conductive charging interface the automatic connection system is provided respectively required as due to the weight of a respective conductive charging cable an ordinary person cannot manually connect the charging cable to the conductive charging interface. Thus, the term configured for receiving energy from an automatic connection system means in regard to the present disclosure that the conductive charging interface can only be connected and preferably automatically by the automatic connection system but not manually by an ordinary person. Besides that as the conductive charging interface is provided underneath the preferably vehicle body of the electrical vehicle a manual connection it is difficult if possible at all.

In other words, the proposed electrical vehicle respectively the method and the charger discussed later provide a unified interface for at least two of conductive charging and inductive charging provided at the bottom of the vehicle, which advantageously allows for example for cheap ubiquitous slow charging through the inductive charging interface without any moving parts, for example by also using an inductive automatic connection system with only a few moving parts, and also allows for relatively fast conductive charging with said automatic connection system with preferably only a few moving parts. Therefore, the electrical vehicle respectively the method and the charger discussed later allows charging without an ordinary person to handle vulnerable charge cables and/or connectors thereby significantly reducing the risk of damaging said charge cables respectively connectors. Further, the proposed solution is usable without any additional steps except for parking the electrical vehicle. Even forever, venerable sockets at an outside perimeter of the electrical vehicle can be removed such that the proposed solution provides increased security during a collision. Besides that, high-power cabling in the electrical vehicle can be kept shorter and thus cheaper compared to prior art solutions. The term at least two of the inductive charging interface and the conductive charging interface shall be understood that for example two inductive charging interfaces, two conductive charging interfaces, one inductive charging interface and one conductive charging interface, one inductive charging interface and two conductive charging interfaces etc. are present. Thus, the wording the inductive charging interface and the conductive charging interface shall be understood as at least two of the inductive charging interface and the conductive charging interface.

The term automatic connection system is to be understood in regard to the present application as a means which allows automatically establishing an electrical connection between the conductive charging interface and the charger. The vehicle body can be provided as any vehicle body known from prior art, for example made of metal or plastic. The term arranged underneath the vehicle body is preferably understood that the inductive charging interface and the conductive charging interface are arranged both ground facing and/or can be connected from ground side. The term configured for alternately or concurrently receiving electrical energy is preferably understood that the electrical vehicle can be charged either via the conductive charging interface or the inductive charging interface, or at the same time via both interfaces for advantageously decreasing charging time. For example, if two conductive charging interfaces are present said term shall be understood that charging can be done either by both conductive charging interfaces at the same time or by one of said interfaces at a time.

The electrical vehicle can be provided as an electrical car, an ebus, a truck or any other electrical vehicle means. Providing said interfaces underneath the vehicle body reduces cabling, weight of the electrical vehicle and respective costs, as a vehicle battery is usually provided on the bottom of the electrical vehicle due to weight distribution and therefore close to said interfaces. For charging the electrical vehicle via the conductive charging interface the electrical vehicle is for example parked above an automatic connection system of a charger, which then automatically connects the electrical vehicle while charging may take 5 to 30 minutes. Therefore, the conductive charging interface, preferably comprising a charging connector such as a plug or socket as discussed below, is configured for charging currents of 63 A, 80 A, 125 A or more. The inductive charging interface is preferably provided as an AC inductive charging interface and/or the conductive charging interface is preferably provided as an AC conductive charging interface and/or as a DC conductive charging interface so that conductive charging may not be limited to AC or DC only. Thus, at least three interface types can be provided, whereby at least two or two interface types are combined. The electrical energy preferably comprises an AC voltage or a DC voltage for respective conductive and/or inductive small-gap charging. Providing these interfaces on the bottom underneath the vehicle body respectively underneath the electrical vehicle shall preferably be understood that use other charging interfaces for example on a side of the electrical vehicle is not excluded. Thus, the proposed solution allows a backwards compatibility by combining the charging interfaces underneath the vehicle body with other charging methods.

In a further preferred implementation of the electrical vehicle or of the method the at least two of the inductive charging interface and the conductive charging interface are integrated in the vehicle body of the electrical vehicle, provided as a joint interface, attached to the vehicle body, attached to the bottom of the electrical vehicle and/or arranged adjacent to each other. Integrated in the vehicle body means for example that both interfaces are provided one-piece with the vehicle body. Provided as joint interface means for example that both interface are physically attached and/or manufacture as one piece.

In another preferred implementation of the electrical vehicle or of the method, if the inductive charging interface is provided, the inductive charging interface comprises an inductive coil integrated in the vehicle body, attached to the vehicle body, attached to the bottom of the electrical vehicle and/or arranged circumferential around the conductive charging interface. Inductive charging shall be preferably understood as involving mainly through space use of an induction coil which produces an electromagnetic field via the charger where energy is transferred to the inductive charging interface which is also equipped with a corresponding induction coil provided underneath the vehicle body. The inductive charging interface receives the energy from the magnetic field and reconverts it into usable electric current which charges the electrical vehicle's battery. Conductive charging shall be preferably understood as requiring a physical connection via the conducting charging interface between the electronic vehicle's battery and the charger.

In a further preferred implementation of the electrical vehicle or of the method the electrical vehicle comprises a backseat and/or a rear axle, the at least two of the inductive charging interface and the conductive charging interface are arranged underneath the backseat and/or adjacent to the rear axle of the electrical vehicle. The vehicle battery is preferably arranged on the bottom of the vehicle for receiving an optimal weight distribution and in particular underneath the backseat. If the conductive charging interface to the vehicle battery is provided in equal manner underneath the backseat and/or adjacent to the rear axle thick cables/busbars required for connecting the conductive charging interface to the vehicle battery can be very short in length and thus light in weight.

In another preferred implementation of the electrical vehicle or of the method the electrical vehicle is provided as an autonomous vehicle. An autonomous vehicle, also referred to as electrical car, as driverless car and a self-driving car, is a vehicle that is capable of sensing its environment and navigating without human input. Autonomous vehicles often combine a variety of techniques to perceive their surroundings, including radar, laser light, GPS, odometry, and computer vision. Advanced control systems interpret sensory information to identify appropriate navigation paths, as well as obstacles and relevant signage.

The object of the invention is further solved by a charger for charging an electrical vehicle, comprising at least two of
an inductive charging coil configured for connecting with an inductive charging interface arranged underneath preferably a vehicle body of the electrical vehicle, and
a conductive charging connector configured for connecting via an automatic connection system with a conductive charging interface arranged underneath the preferably vehicle body of the electrical vehicle and/or comprising the automatic connection system configured for connecting with the conductive charging interface arranged underneath the preferably vehicle body of the electrical vehicle, whereby
the at least two of the inductive charging interface and the conductive charging interface are configured for alternately or concurrently charging the electrical vehicle with electrical energy.

The charger allows for alternately or concurrently charging the electrical vehicle with electrical energy via said interfaces thereby providing a very flexible and in regard to the conductive charging an automated charging possibility. The charger is preferably provided as an Electric Vehicle Supply Equipment, EVSE, for charging the electrical vehicle according to a called Combined Charging System, CCS, protocol according to IEC 61851-23 and SAE J1772. The Combined Charging System, CCS, protocol is a fast charging method for charging electric vehicles delivering high-voltage direct current via a charging connector derived from SAE J1772 standard (IEC Type 1) or IEC Type 2 connector. Automobile manufactures that support CCS include Jaguar, Volkswagen, General Motors, BMW, Daimler, Ford, FCA, Tesla and Hyundai. The CSS standard is controlled by the so called CharIN consortium. Besides other protocols such as, for example, CHAdeMO, as abbreviation of CHArge de Move, or GB/T, in particular according to 20234.3-2011 standard, can be used in connection with the proposed system and/or method.

The object of the invention is further solved by a charging arrangement comprising the electrical vehicle and the charger as described before, whereby the electrical vehicle or the charger comprises the automatic connection system configured for automatically electrically connecting the electrical vehicle and the charger. Due to the automatic connection system conductive charging can automatically established once the electrical vehicle is parked above the charger.

In a further preferred implementation of the charging arrangement
the charger or the electrical vehicle comprises a funnel extending in a plane and comprising a first connector as conductive charging connector or as conductive charging interface, respectively, arranged at the centre of the funnel, and
the electrical vehicle or the charger, respectively, comprises an actuator with a second connector as conductive charging interface or as conductive charging connector, respectively, attached thereto, whereby the second connector is orthogonally displaceable in respect to the plane and the actuator is configured for moving the second connector in a linear direction for connecting with the first connector.

In another preferred implementation of the method
the charger or the electrical vehicle comprises a funnel extending in a plane and comprising a first connector as conductive charging connector or as conductive charging interface, respectively, arranged at the centre of the funnel, and
the electrical vehicle or the charger, respectively, comprises a second connector as conductive charging interface or as conductive charging connector, respectively, whereby the second connector is orthogonally displaceable in respect to the plane, comprising the step of
moving the second connector in a linear direction for connecting with the first connector.

Such way, besides other alternatives, the automatic connection system is provided by the actuator respectively by moving the second connector, thereby thanks to the funnel providing an efficient and simple automated possibility for connecting the electrical vehicle and the charger, even by having heavy connectors and charging cables attached to the second connector. The charger may comprise a transformer and/or a converter for connecting to respectively receiving electrical energy from an AC grid, which is transformed and/or converted to DC for being supplied to the second connector via a charging cable. The charging cable is preferably arranged within or attached to the actuator thereby connecting the converter and the second connector. The charging cable may comprise liquid cooling. However, as the actuator allows connecting heavy charge cables in an automated manner via the second connector to the first connector liquid cooling for the charging cable can be omitted.

Generally, the charger, also referred to as electric vehicle charging station, EV charging station, electric recharging point, charging point and charge point, is an element in an infrastructure that supplies electric energy for the recharging of electric vehicles, such as plug-in electric vehicles, including electric cars, neighbourhood electric vehicles and plug-in hybrids. The charging cable preferably comprises DC conductors having a diameter of ≥ 25 mm², 50 mm² or 70 mm² and/or a length of ≥ 4 m, 5 m or 7,5m and ≤ 5 m, 7,5 m or 10 m. The charging cable, the conductive charging interface, the first connector and/or the second connector are preferably provided according to IEC 62196 standard, for example as SAE J1772 or IEC 62196 Type 2 connectors. The charging cable, the first connector and/or the second connector may comprise further conductors, such as, for example, a Proximity Pilot, PP, line for a PP signal, a Control Pilot, CP, line for a CP signal line and/or a PE line for a PE signal. PP line, CP line and/or PE line and respectively signalling are preferably implemented according to the Combined Charging System, CCS, protocol, in particular according to IEC 61851 or IEC 61851-23 standard.

In a further preferred implementation of the arrangement or of the method the charger comprises the funnel and the first connector, which are both arranged on ground and the actuator is arranged on the bottom of the electrical vehicle, preferably on the bottom of the vehicle chassis. Preferably, the funnel and the first connector comprise a low thickness of for example not more than 2, 3 or 5 cm such that the funnel with the first connector can be placed on ground, for example on top of a parking surface. Alternatively, the funnel can be integrated with ground, for example provided in one piece with the parking surface. The actuator is preferably integrated with the electrical vehicle such that during normal operation of the electrical vehicle the actuator does not disrupt driving. Preferably, the actuator is arranged underneath a base plate of the electrical vehicle.

In another preferred implementation of the arrangement or of the method the actuator is configured for lifting the second connector and/or comprises a spring configured for lifting up the second connector. The second connector is preferably vertically displaceable in respect to the plane and/or in respect to the funnel. Thus, in case the funnel is provided on ground, the second connector is preferably lowerable in respect to the funnel, in particular by gravity, for subsequently connecting with the first connector and/or can be lifted up once charging is finished for storing in a storage shell.

In a further preferred implementation of the arrangement or of the method the electrical vehicle or the charger, respectively, comprises a storage shell configured for protecting the unconnected first connector against environmental influences. The storage shell is preferably provided as a casing, into which the second connector can be moved by the actuator, for protecting the actuator against water, dirt and the like. Preferably, the storage shell is completely enclosed having an opening, through which the first connector can be moved in and out of the storage shell.

The storage shell may comprise a sealing for sealing the second connector against said environmental influences. The second connector is preferably moveable between an extracted position, where the second connector is encased by the storage shell or connected to the first connector, and a retracted position, at which the second connector is not encased by the storage shell and not connected to the first connector but orthogonally displaceable in respect to the plane. The plane, if the funnel is arranged on ground, preferably extends parallel to the ground and/or in horizontal direction. If the funnel is attached to the electrical vehicle, the plane preferably extends parallel to the bottom of the electrical vehicle and/or in horizontal direction. The storage shell may comprise a sensor, which allows the electrical vehicle not to drive off as long as the second connector is not stored in the storage shell. The storage shell may comprise a flap which can be swivelled by the second connector for closing the storage shell.

In another preferred implementation of the arrangement or of the method the funnel comprises, in linear direction towards the first connector, a placement area followed by a funnel area for aligning the second connector with the first connector. The placement area is preferably greater in horizontal direction than the funnel area thereby allowing for a big misalignment compensation when connecting the second connector with the first connector. The funnel area, in direction towards the first connector, preferably comprises a declining extension in horizontal direction and/or in direction of the plane for aligning the second connector. Thus, the funnel respectively the placement area and/or the funnel area advantageously compensate for any misalignment of the second connector in direction of the plane and/or in horizontal direction.

In a preferred implementation the placement area and the tunnel area comprise ridges having a fish-bone structure for aligning the second connector with the first connector. Ridges having a fish-bone structure, which are preferably aligned towards the centre of the tunnel, advantageously provide guidance to the second connector when connecting to the first connector.

In another preferred implementation the funnel only extends in horizontal direction as single plane, the second connector is vertically displaceable and the actuator is configured for linearly moving the second connector only in horizontal direction.

In a preferred implementation the method comprises the step of lifting up the second connector, and/or the method and/or the system comprises a spring configured for lifting up the second connector. Alternatively, a spring loaded mechanism can be provided for lowering and/or lifting up the second connector. Orthogonally displaceable means preferably that the second connector is lowered and/or lifted up while being in the same orientation, for example horizontally aligned in respect to the first connector.

In a preferred implementation the method comprises the step of moving the second connector in opposite linear direction out of the storage shell. If the second connector is moved out of the storage shell that is attached to the electrical vehicle, the second connector preferably falls to ground by gravity. Thereafter, the second connector can be pushed by said linear movement into the first connector such that charging of the electrical vehicle may start.

In another preferred implementation the method comprises the steps of moving the second connector in opposite linear direction for disconnecting the second connector from the first connector, displacing the second connector in orthogonal direction in respect to the plane, and/or moving the second connector in linear direction into the storage shell. Once charging has been finished, the second connector can be disconnected from the first connector by retracting the actuator. In case the second connector has fallen to ground before connecting with the first connector, the second connector is preferably pivoted up for subsequently storing in the storage shell so that the electrical vehicle can leave the charger by driving away.

In a preferred implementation the method comprises the step of locking the second connector in an orthogonally undisplaceable position in respect to the plane for moving the second connector into and/or out of the storage shell. The orthogonally undisplaceable position preferably comprises a vertical lock, for example by a latch. In a further preferred implementation of the arrangement or of the method the placement area and/or the tunnel area comprise ridges having a fish-bone structure for aligning the second connector with the first connector.

In another preferred implementation the charger or the electrical vehicle, respectively, comprises an additional funnel extending in the same plane and comprises an additional first connector arranged at the centre of the additional funnel and the additional funnel is arranged opposite to the funnel such that the second connector can be either connected to the first connector or to the additional first connector. Such way charging is independent from a driving direction of the electrical vehicle, as the electrical vehicle can connect to the charger from two opposite sides

Further embodiments and advantages of the charger and the arrangement are directly and unambiguously derived by the person skilled in the art from the electrical vehicle and from the method as described before.

### Brief description of drawings

These and other aspects of the invention will be apparent from and elucidated with reference to the embodiments described hereinafter.

In the drawings:
Fig. 1 shows an electrical vehicle comprising an inductive charging interface and a conductive charging interface according to an exemplary embodiment as schematic side view in Fig. 1a and as schematic bottom view in Fig. 1b,
Fig. 2 shows an automatic connection system for connecting the conductive charging interface of Fig. 1 and a charger according to a first exemplary embodiment in a perspective-schematic view,
Fig. 3 an automatic connection system for connecting the conductive charging interface of Fig. 1 and a charger according to a second exemplary embodiment in a perspective-schematic view,
Fig. 4 shows a funnel of the automatic connection system according to the first and second exemplary embodiment in schematic top-view,
Fig. 5 shows the automatic connection system with an automatic connection method in various stages according to the first exemplary embodiment in a schematic side view, and
Fig. 6 shows the automatic connection system with an automatic connection method in various stages according to the second exemplary embodiment in a schematic side view.

### Description of embodiments

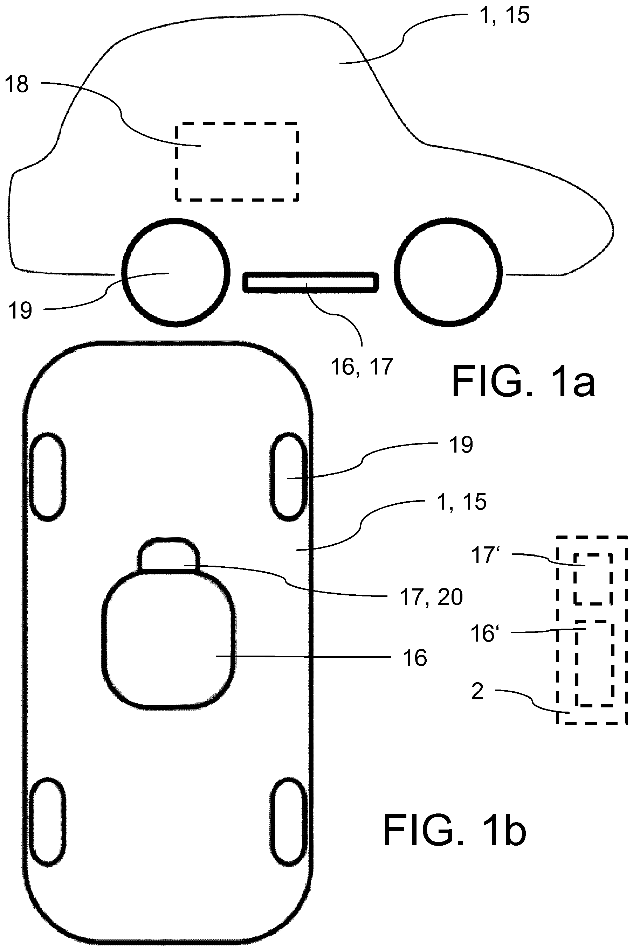

Fig. 1 shows an electrical vehicle 1, which is provided as an autonomous vehicle and is shown in a schematic side view in Fig. 1a and as schematic bottom view in Fig. 1b. The electrical vehicle 1 comprises a vehicle body 15 made of metal or plastic. An AC inductive charging interface 16 and a DC conductive charging interface 17 are arranged underneath a backseat 18 and adjacent to a rear axle 19 of the vehicle body 17. While not depicted, both interfaces could also be provided as AC inductive charging interfaces 16 or as DC conductive charging interface 17. The inductive charging interface 16 comprises an inductive coil 20, which is integrated in the vehicle body 15. The conductive charging interface 17 is arranged adjacent to the inductive charging interface 16 such that the inductive charging interface 16 and the conductive charging interface 17 are provided as a joint interface for alternately or concurrently receiving electrical energy for charging a battery of the electrical vehicle 1.

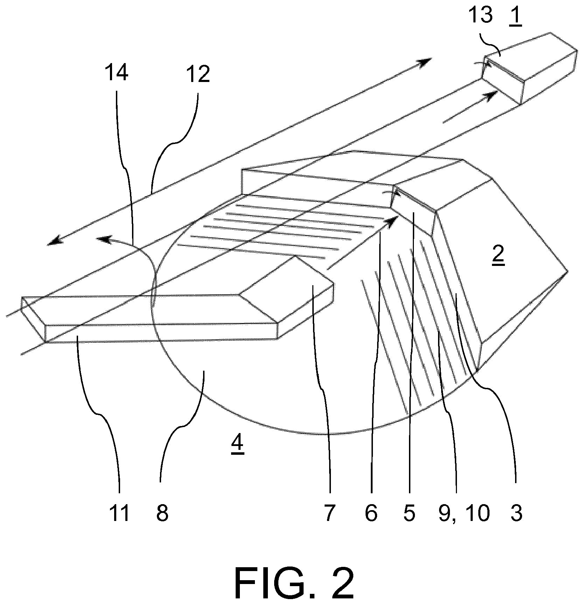

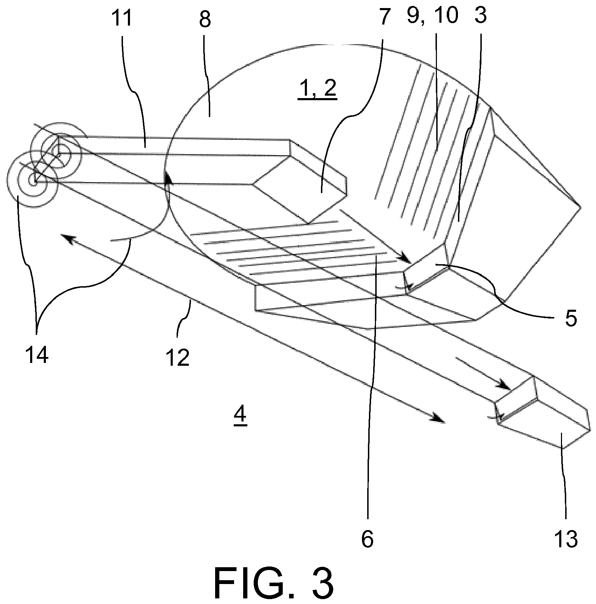

Thereby, the conductive charging interface 17 is configured for receiving electrical energy from a charger 2 via an automatic connection system 11 as depicted in Figs. 2 and 3. The charger 2 is provided as an Electric Vehicle Supply Equipment, EVSE, and allows charging the electrical vehicle 1 via a Combined Charge System, CCS, protocol according to IEC 61851-23 and/or SAE J1772 standard. The charger 2, only schematically depicted in Fig. 1b, is connected via a not depicted converter and transformer to an AC grid and comprises an AC inductive charging coil 16' configured for connecting with the AC inductive charging interface 16 and a DC conductive charging connector 17' configured for connecting via the automatic connection system 11 with the DC conductive charging interface 16. By referring to Fig. 3, the DC conductive charging connector 17' is provided as plug as second connector 7, while the DC conductive charging interface 17 is provided as socket as first connector 5. Configured for receiving energy from an automatic connection system 11 means that the conductive charging interface 17 is only automatically connectable but not manually by an ordinary person, also simply because the conductive charging interface 17 is provided underneath the vehicle body 17.

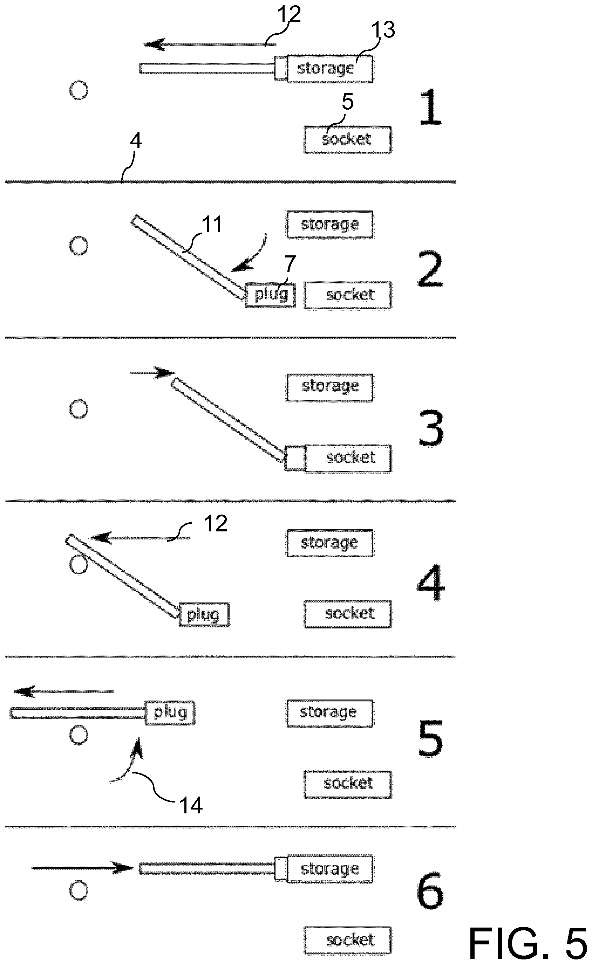

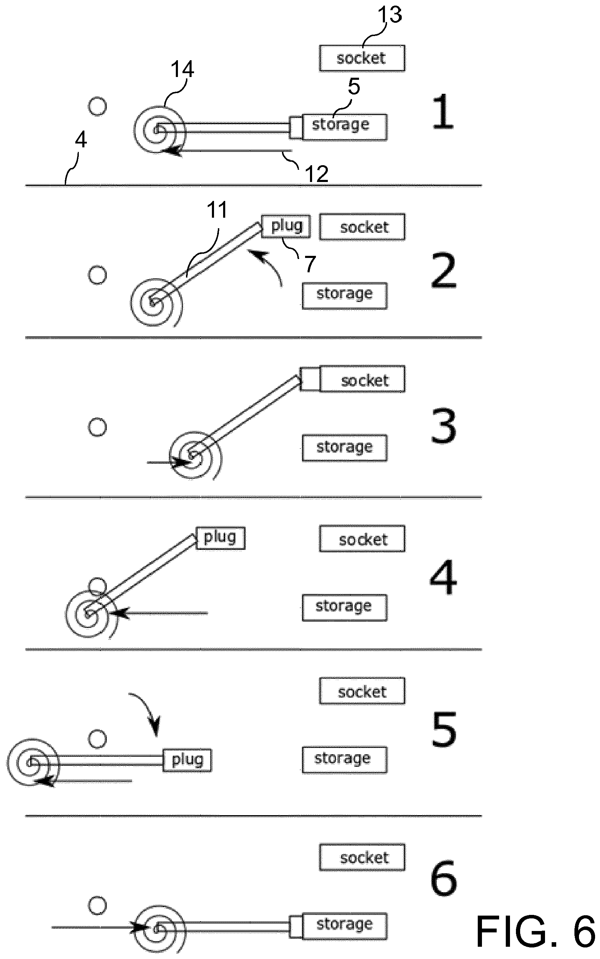

The automatic connection system 11 as discussed in the following in form of an actuator 11 in combination with a funnel 3 can be integrated into respectively attached to the vehicle body 17 or to the charger 2. In this regard Figs. 2 and 3 show these two automatic connection systems 11 for executing automatic connection methods according to two exemplary embodiment in a perspective-schematic view. Figs. 5 and 6 show for the respective automatic connection systems 11 automatic connection methods in various stages according to the two exemplary embodiments in a schematic side view.

In Fig. 2, the charger 2 comprises a funnel 3, which is arranged on ground 4. The funnel only extends in a single, horizontal plane and comprises at its centre a schematically depicted first connector 5 as DC . The first connector 5 is provided as socket for electrically connecting, indicated by arrow 6, with a second connector 7 provided as plug. The first connector 5 and the second connector 7 are each provided according to IEC 62196 standard.

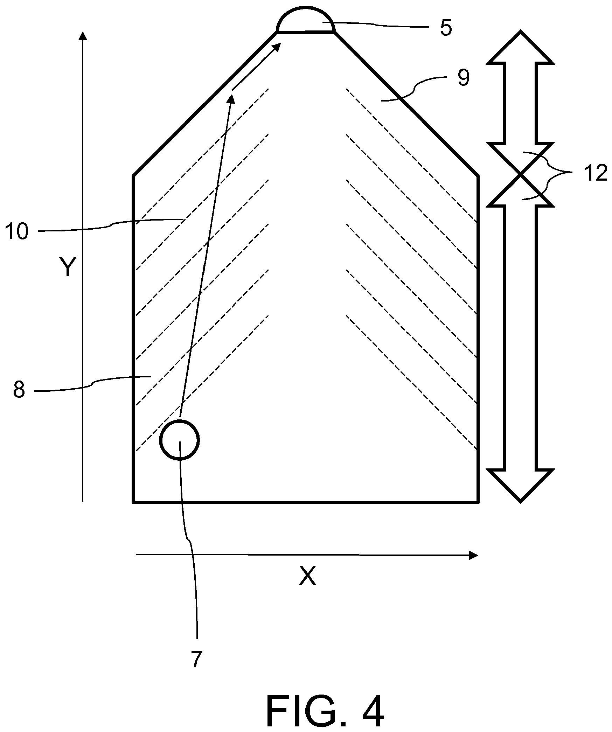

The funnel 3 comprises, in linear direction towards the funnel centre respectively towards the first connector 5, first a placement area 8 followed by a funnel area 9. The placement area 8 and the funnel area 9, also depicted in Fig. 4, are provided with ridges having a fish-bone structure 10. Such way, when placing the second connector 7 onto the placement area 8 as depicted in Fig. 2, by moving the second connector 7 only in linear direction towards the first connector 7 respectively the funnel 3, indicated by arrow 6, the second connector 7 is being centred by the funnel 3 within the funnel area 9 until the second connector 7 becomes electrically connected with the first connector 5. Thereby the ridges having the fish-bone structure 10 support said centring of the second connector 7, as indicated in Fig. 4 by the small arrows.

For moving the second connector 7 in linear direction the electrical vehicle 1 comprises an electromechanical actuator 11, at the tip of which the second connector 7 is firmly attached. The actuator 11 is attached from underneath to respectively integrated with a floor plate of the electrical vehicle 1. The actuator 11 allows for moving the second connector 7 in horizontal, linear direction only, as indicated by arrows 6 and 12, underneath the floor plate. Such way the actuator 11 is moveable between an extracted and retracted position. Besides that the second connector 7 is attached to the actuator 11 orthogonally displaceable in respect to the plane defined by the funnel 3 respectively by the funnel area 9. Such way the actuator 11 allows for electrically connecting the second connector 7 to the first connector 5 by a single, linear movement, as explained in the following.

For protecting the unconnected second connector 7 against environmental influences, the vehicle 1 comprises a storage shell 13, which is arranged in linear movement direction of the actuator 11 and provided underneath and attached to the floor plate of the electrical vehicle 1. In the extracted position of the actuator 11 the second connector 7 is fully encased by the storage shell 13.

Thus, by referring to Fig. 5 showing the automatic connection method in various stages, for charging the electrical vehicle 1 with electrical energy, the electrical vehicle 1 comprising the actuator 11 and the storage shell 13 stops at the charger 2 such that the storage shell 13 is placed vertically above the charger 2. In the first stage the second connector 7 is still arranged within the storage shell 13 thereby protected against undesired external influences such as water and dirt. As indicated by arrow 12, the actuator 11 moves the second connector 7 in a linear, horizontal movement from its extracted position away and out of the storage shell 13 in direction of its retracted position.

Once the second connector 7 left the storage shell 13, due to gravity the second connector 7 falls down towards ground 4, indicated by a curved arrow, to rest onto the placement area 8 respectively onto the funnel area 9, as depicted in stage 2. In stage 3, the actuator 11 moves the second connector 7 in direction of the first connector 5 towards its extracted position. Due to the funnel 3 the second connector 7 becomes horizontally aligned and subsequently connecting with the first connector 7 even that the second connector 7 is only moved in linear direction.

For disconnecting the second connector 7 from the first connector 5, shown in stage 4, the second connector 7 is retracted by the actuator 11 and thereby disconnected from the first connector, indicated by arrow 12. As the second connector 7 is still vertically displaced in respect to the storage shell 13, the second connector 7 is vertically lifted up by means of a spring or motorized drive 14 of the actuator 11, indicated in stage 5 by the curved arrow 14. Once the second connector 7 is vertically undisplaced in respect to the storage shell 13, the actuator 11 moves the second connector 7 with said linear, horizontal movement into of the storage shell 13, as can be seen in stage 6.

Fig. 3 shows the automatic connection system 11 of Fig. 2 according to a second exemplary embodiment. Opposite to the first embodiment of Fig. 2, with the second embodiment of Fig. 3 the electrical vehicle 1 comprises the funnel 3 and the charger 2 comprises the actuator 11 and the storage shell 13 is arranged on ground 4. The funnel 3 is attached respectively integrated with the floor plate of the electrical vehicle 1. Specifically, the placement area 8 and the funnel area 9 are integrated flash with the floor plate such that the funnel 3 is open towards ground 4. Such way, once the electrical vehicle 1 has been positioned above the charger 2, the actuator 11 can be retracted, as depicted in stage 1 in Fig. 6, so that the second connector 7 moves out of the storage shell 13. Once the second connector 7 has been moved out of the storage shell 13, the spring 14 raises the second connector 7 up to the placement area 8, as can be seen in stage 2.

In stage 3, the actuator 11 extracts such that the second connector 7 connects to the first connector 5. Thereby, as explained before, the second connector 7 is centred by the funnel 3 while sliding on the funnel area 9 towards the first connector 5. Once the electrical vehicle 1 has been charged, for disconnecting the connectors 5, 7 from each other, in stage 4 the actuator 11 retracts with linear movement direction parallel to ground 4 and thereby moves the second connector 7 out of the first connector 5. In the following stage 5, the second connector 7 is orthogonally displaced in respect to the plane defined by the funnel 3 i.e. pivoted towards ground 4 until the actuator 11 and the second connector 7 extend in linear horizontal direction. In stage 6 the actuator 11 is extended for storing the second connector 7 within the storage shell 13.

In another embodiment, the charger 2 or the electrical vehicle 1, respectively, comprises an additional funnel 3, which extends in the same plane as the funnel 3. The additional funnel 3 comprises an additional first connector 5, which is arranged at the centre of the additional funnel 3. As the additional funnel 3 is arranged opposite to the funnel 3, the second connector 7 can be either connected to the first connector 5 or to the additional first connector 5 such that the electrical vehicle can be charged either from one direction or from the opposite direction.

While the invention has been illustrated and described in detail in the drawings and foregoing description, such illustration and description are to be considered illustrative or exemplary and not restrictive; the invention is not limited to the disclosed embodiments. Other variations to be disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Reference signs list

- 1: electrical vehicle
- 2: charger
- 3: funnel, additional funnel
- 4: ground
- 5: first connector, additional first connector
- 6: arrow
- 7: second connector
- 8: placement area
- 9: funnel area
- 10: ridges having a fish-bone structure
- 11: actuator, automatic connection system
- 12: arrow
- 13: storage shell
- 14: spring
- 15: vehicle body
- 16: inductive charging interface
- 16': inductive charging coil
- 17: conductive charging interface
- 17': conductive charging connector
- 18: backseat
- 19: rear axle
- 20: inductive coil

## Claims

1. Electrical vehicle (1) comprising at least two of an inductive charging interface (16) and a conductive charging interface (17), whereby
the at least two of the inductive charging interface (16) and the conductive charging interface (17) are configured for alternately or concurrently charging the electrical vehicle (1) with electrical energy,
if the conductive charging interface (17) is provided then the conductive charging interface (17) is configured for receiving electrical energy from a charger (2) via an automatic connection system (11) and/or comprises the automatic connection system (11) for connecting with the charger (2), and
the at least two of the inductive charging interface (16) and the conductive charging interface (17) are arranged underneath the electrical vehicle (1).

2. Method for charging an electrical vehicle (1) comprising at least two of an inductive charging interface (16) and a conductive charging interface (17), whereby
the at least two of the inductive charging interface (16) and the conductive charging interface (17) are arranged underneath the electrical vehicle (1), and the method comprising the steps of:
if the conductive charging interface (17) is provided, connecting the conductive charging interface (17) with a charger (2) via an automatic connection system (11), and/or
charging the electrical vehicle (1) alternately or concurrently with the at least two of the inductive charging interface (16) and the conductive charging interface (17).

3. Electrical vehicle or method according to the previous claims, whereby the at least two of the inductive charging interface (16) and the conductive charging interface (17) are integrated in a vehicle body (15) of the electrical vehicle (1), provided as a joint interface, attached to the vehicle body (15), attached to the bottom of the electrical vehicle (1) and/or arranged adjacent to each other.

4. Electrical vehicle or method according to any of the previous claims, whereby, if the inductive charging interface (16) is provided, the inductive charging interface (16) comprises an inductive coil (15) integrated in a vehicle body (15) of the electrical vehicle (1), attached to the vehicle body (15), attached to the bottom of the electrical vehicle (1) and/or arranged circumferential around the conductive charging interface (167).

5. Electrical vehicle or method according to any of the previous claims, whereby the electrical vehicle (1) comprises a backseat (18) and/or a rear axle (19), the at least two of the inductive charging interface (16) and the conductive charging interface (17) are arranged underneath the backseat (18) and/or adjacent to the rear axle (19) of the electrical vehicle (1).

6. Electrical vehicle or method according to any of the previous claims, whereby the electrical vehicle (1) is provided as an autonomous vehicle.

7. Charger (2) for charging an electrical vehicle (1), comprising at least two of
an inductive charging coil (16') configured for connecting with an AC inductive charging interface (16) arranged underneath the electrical vehicle (1), and
a conductive charging connector (17') configured for connecting via an automatic connection system (11) with a conductive charging interface (17) arranged underneath the electrical vehicle (1) and/or comprising the automatic connection system (11) configured for connecting with the conductive charging interface (17) arranged underneath the electrical vehicle (1), whereby
the at least two of the inductive charging coil (16') and conductive charging connector (17') are configured for alternately or concurrently charging the electrical vehicle (1) with electrical energy.

8. Charging arrangement comprising the electrical vehicle (1) and the charger (2) according to any of the previous claims, whereby the electrical vehicle (1) or the charger (2) comprises the automatic connection system (11) configured for automatically electrically connecting the electrical vehicle (1) and the charger (2).

9. Charging arrangement according to the previous claim, whereby the charger (2) or the electrical vehicle (1) comprises a funnel (3) extending in a plane and comprising a first connector (5) as conductive charging connector (17') or as conductive charging interface (17), respectively, arranged at the centre of the funnel (3), and
the electrical vehicle (1) or the charger (2), respectively, comprises an actuator (11) with a second connector (7) as conductive charging interface (17) or as conductive charging connector (17'), respectively, attached thereto, whereby the second connector (7) is orthogonally displaceable in respect to the plane and the actuator (11) is configured for moving the second connector (7) in a linear direction for connecting with the first connector (5).

10. Method according to any of the previous method claims, whereby
the charger (2) or the electrical vehicle (1) comprises a funnel (3) extending in a plane and comprising a first connector (5) as conductive charging connector (17') or as conductive charging interface (17), respectively, arranged at the centre of the funnel (3), and
the electrical vehicle (1) or the charger (2), respectively, comprises a second connector (7) as conductive charging interface (17) or as conductive charging connector (17'), respectively, whereby the second connector (7) is orthogonally displaceable in respect to the plane, comprising the step of
moving the second connector (7) in a linear direction for connecting with the first connector (5).

11. Arrangement according to the previous arrangement claim, whereby the charger (2) comprises the funnel (3) and the first connector (5), the funnel (3) and the first connector (5) are both arranged on ground (4) and the actuator (11) is arranged on the bottom of the electrical vehicle (1).

12. Arrangement according to any of the previous arrangement claims, whereby the actuator (11) is configured for lifting the second connector (7) and/or comprises a spring (14) configured for lifting up the second connector (7).

13. Arrangement or method according to any of the previous four claims, whereby the electrical vehicle (1) or the charger (2), respectively, comprises a storage shell (13) configured for protecting the unconnected first connector (5) against environmental influences.

14. Arrangement or method according to any of the five previous claims, whereby the funnel (3) comprises, in linear direction towards the first connector (5), a placement area (8) followed by a funnel area (9) for aligning the second connector (7) with the first connector (5).

15. Arrangement or method according to the previous claim, whereby the placement area (8) and/or the tunnel area (9) comprise ridges having a fish-bone structure (10) for aligning the second connector (7) with the first connector (5).
